# EUROPEAN PATENT SPECIFICATION

(11) **EP 2 363 243 B1**
(45) Date of publication and mention of the grant of the patent: **02.09.2015**
(21) Application number: 09829064.6
(22) Date of filing: 24.11.2009
(51) Int. Cl.: B24C 11/00, B22F 1/00, B22F 9/08, B24C 1/10, C21D 7/06

(54) **METHOD FOR MANUFACTURING BLASTING MATERIAL FOR SHOT-PEENING**
VERFAHREN ZUR HERSTELLUNG VON STRAHLMATERIAL FÜR KUGELSTRAHLEN
PROCÉDÉ DE FABRICATION D'UNE MATIÈRE DE PROJECTION POUR UN GRENAILLAGE

(30) Priority: 26.11.2008 JP 2008301718
(43) Date of publication of application: 07.09.2011
(73) Proprietor: Sintokogio, Ltd., Nagoya-shi, Aichi 450-0002 (JP)
(72) Inventor: MITSUBAYASHI, Masahiko, Toyota City Aichi 471-8571 (JP); KANAZAWA, Takaaki, Toyota City Aichi 471-8571 (JP); ISHIKAWA, Masayuki, Kitanagoya-Shi Aichi 481-8678 (JP)
(74) Representative: Thum, Bernhard
(86) International application number: PCT/JP2009/069794
(87) International publication number: WO 2010/061816

(56) References cited:
- EP-A1- 0 687 739
- GB-A- 729 704
- JP-A- 7 276 242
- JP-A- 8 003 633

## Description

The present invention relates to a method for manufacturing projection materials for a shot peening.

### [Background of the Invention]

Conventionally, it is well known that a shot peening processing for improving the fatigue strengths of parts, e.g., a gear, a shaft, and so on, of an automobile, imparts a compression residual stress on surfaces of the parts by projecting hard particles.

In recent years, a need for a light automobile has caused a request for downsizing its parts such that a further improvement of the fatigue strength of the parts has become necessary. Therefore, the field of shot peening processing has provided motivation for finding a technique to manufacture projection materials having a higher hardness.

Further, the field of shot peening processing has motivated a technique for adjusting and managing the hardness of the projection materials to more stably ensure the quality the projection materials.

Although, e.g., a ceramic, an amorphous metal, and a WC composition metal, as projection materials having a high hardness are available and are used, the costs of these material are impractically high.

Further, with only quenching and tempering exemplified as techniques to improve the hardness of a steel material whose cost is relatively lower, there is a limit to how much the material will harden, and thus it is difficult to make the material hard.

Conventionally, to solve the above problem, a method for manufacturing metal shots as disclosed in Patent Literature 1 is known. The method includes the steps of projecting and hitting shots having a hardness that is the same as or more than that of the metal shots to be manufactured to project to the surface of the metal shots, so as to cause a localized rise of the high temperature near the surface layer of the metal shots to a temperature more than a predetermined temperature and rapidly cooling the metal shots to improve the fatigue strength.

With this method disclosed in Patent Literature 1, the hardness of the surface of the metal shots can be improved. Further, while repeating the step of projecting the shots against the metal shots, the temperature of the metal shots is increased above the predetermined temperature thereby resulting in a quenching of the heat. It also results in an effect of tempering the metal shots when the temperature is decreased to below the predetermined temperature. Thus, the toughness of the metal shots can also be improved.

However, repeating the step of projecting the shots against the metal shots often involves improving the toughness of the metal shots. Therefore, because the toughness of all the metal shots is insufficiently controlled, there is a disadvantage in that the above method is unsuitable to a stable control of mass-produced metal shots. Further, it is difficult to achieve a sufficiently high hardness using low-cost materials when the method, e.g., as disclosed in Patent Literature 1, is applied.
[PATENT LITERATURE 1] Japanese Patent Laid-open Publication No. Tokkaihei 8[1996]-3633

Document EP0687739 discloses on page 3 lines 8 to 12 hardening of a ferrous shot material by quenching and tempering. The same document discloses on page 3 lines 1 to 7 as an alternative the work hardening of a shot material by impacting the hardenable shot onto a surface.

### [DISCLOSURE OF THE INVENTION]

### [THE PROBLEM TO BE SOLVED BY THE INVENTION]

One object of the present invention is to provide a method for manufacturing projection materials for shot peening, to achieve a sufficiently high hardness with a lower cost for the materials.

### [THE MEANS TO SOLVE THE PROBLEM]

The method of claim 1 is a method for manufacturing projection materials for shot peening, the method comprising the following steps: quenching the projection materials by rapidly cooling them; tempering the projection materials at a predetermined temperature of the tempering; work hardening the projection materials by imparting a stress on them; wherein steel is used as the raw material for the projection materials.

It is preferable, as recited in claim 2, that the predetermined temperature of the tempering be set as within the range of from 130 °C or more to 230 °C or less.

It is preferable, as recited in claim 3, that the predetermined temperature of the tempering be set within the range of from 160 °C or more to 230 °C or less.

### [THE ADVANTAGES OF THE INVENTION]

With the present invention, a sufficiently high hardness can be achieved, while the costs of the materials is lowered.

The above characteristics and others, and the advantages, will be further clarified by the following detailed explanation. It refers to the contained drawings.

### [BRIEF DESCRIPTION OF THE FIGURES]

[Fig. 1] Fig. 1 illustrates the type of usage of the projection materials for shot peening of the present invention.
[Fig. 2] Fig. 2 is a flowchart of the process for manufacturing the projection materials for shot peening of the present invention.
[Fig. 3] Fig.3 is a schematic diagram of the quenching process of the present invention.
[Fig. 4] Fig. 4 is a schematic diagram of the tempering process of the present invention.
[Fig. 5] Fig. 5 is a schematic diagram of the work hardening process of the present invention.
[Fig. 6] Fig. 6 illustrates the relationships between the tempering temperatures, the hardness after the tempering process, and the hardness after the work hardening process, when the tempering temperatures are varied in the tempering process.
[Fig. 7] Fig. 7 illustrates the values of the compression residual stresses that are imparted on the workpieces to be shot peened, when the shot peening processes are carried out using the projection materials that are manufactured by the process for manufacturing the projection materials for shot peening of the present invention. Fig. 7 also illustrates reference projection materials for a comparison.

### [THE BEST MODE TO CARRY OUT THE INVENTION]

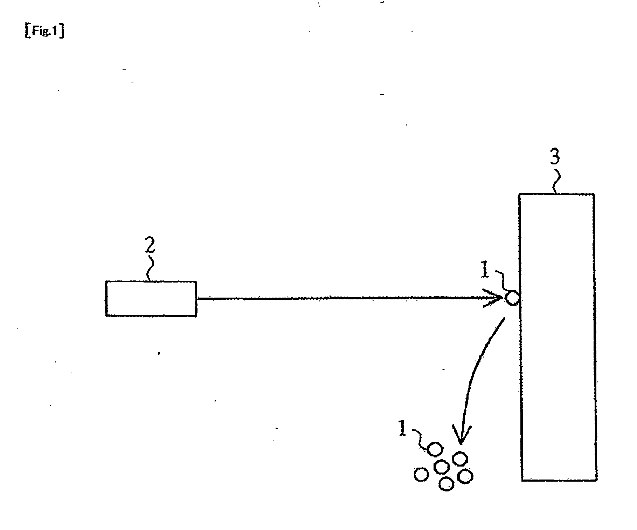

Below the one embodiment of the projection materials for the shot peening process (hereafter, "the projection materials") 1 of the present invention will be explained with reference to Fig.1.

The projection materials 1 are shot particles of steel having a predetermined particle size. The projection materials 1 are projected by an apparatus for shot peening 2 to a target component 3 such that the projection materials 1 collide with the target component 3 to impart a compression residual stress to the surface of the target component 3 so as to improve its fatigue strength.

The apparatus for shot peening 2 is configured to project the projection materials 1 by, for instance, the centrifugal force caused by compressed air or rotary blades. The apparatus for shot peening 2 projects the projection materials 1 at a predetermined velocity at the target component 3, located at a position a predetermined distance from the apparatus for shot peening 2.

The target component 3 is a workpiece to be shot peening by the projection materials 1. The projection materials 1 are projected at and collide with the target component 3 by means of the apparatus for shot peening 2 such that compression residual stress is imparted on the surface of it. The target component 3 includes, but is not limited to, for instance, a component of an automobile such as a gear or a shaft.

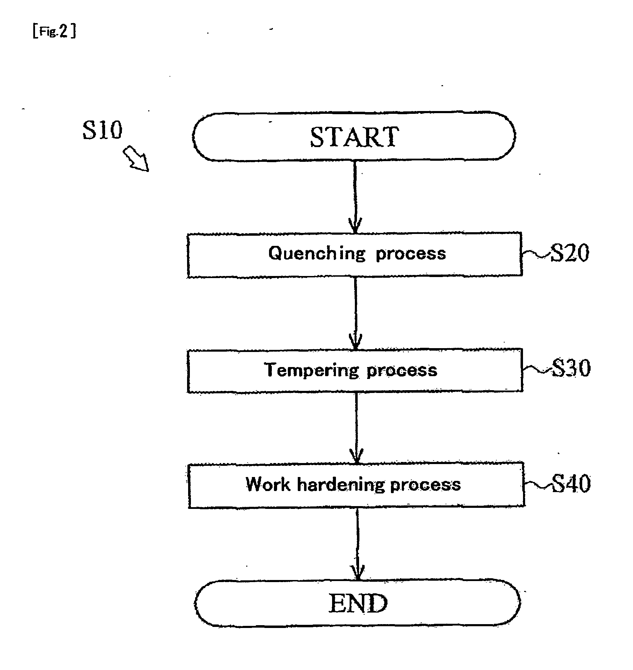

Now a process S10 for manufacturing the projection materials 1 will be explained with reference to Figs. 2-5.

As shown in Fig. 2, the process S10 for manufacturing the projection materials includes a quenching process S20, a tempering process S30, and a work hardening process S40.

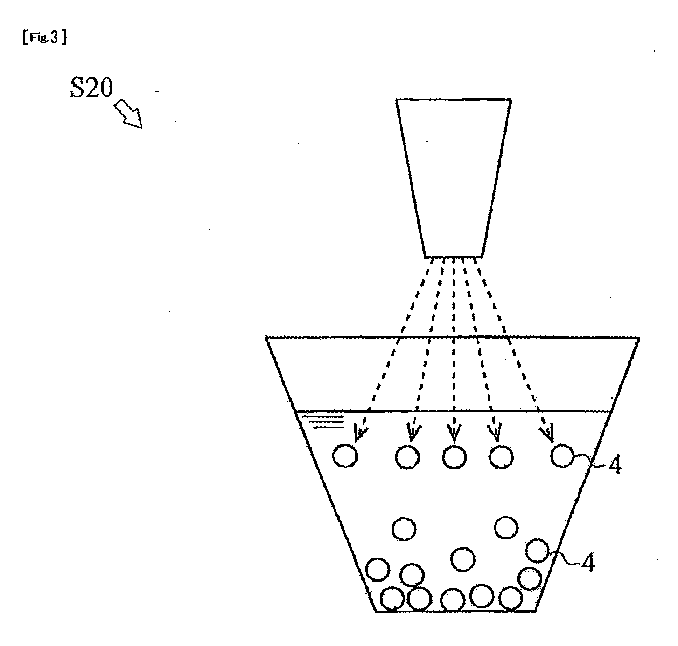

As shown in Fig. 3, the quenching process S20 is a process of thermal treatment using "a water atomization" in which steel materials as raw materials to constitute the projection materials are sprayed into water in a molten phase (or molten-metal phase), to obtain quenching granular particles, each having a predetermined diameter.

In the quenching process S20, the steel material having a quenching property is used as materials to be granulated. This steel is sprayed into water in a molten phase, i.e., the molten steel having an austenite structure such that the molten steel can be quenched ("quenching") and become a martensite structure. The steel material to constitute the projection materials 1 is formed as granular particles 4, each having a predetermined particle-diameter throughout the quenching process S20. The hardness of them is enhanced by the quenching. Further, the toughness of the granular particles 4 is degraded.

The quenching process S20 is not limited to the process with the water atomization, but it may instead be a process to obtain quenched granular particles using the molten-metal materials such as gas atomization and disk atomization, or a quenching process that is carried out by a rapid quenching.

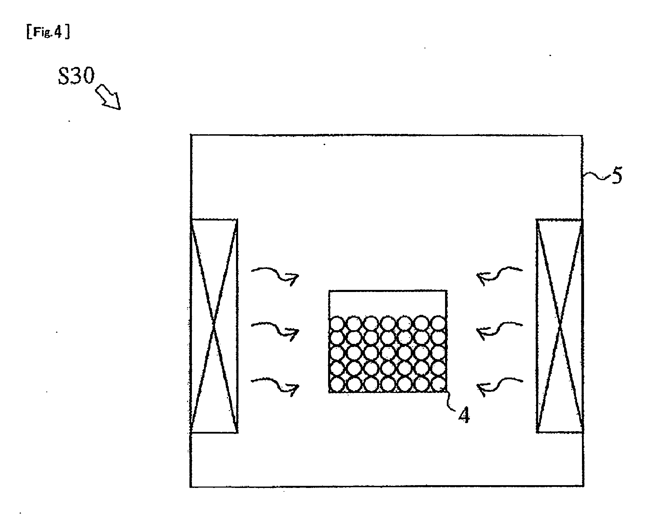

As shown in Fig. 4, the tempering process S30 is a thermal treatment in which the granular particles 4 formed by the quenching process S20 are heated in a heating furnace 5 for a predetermined period, and then are slowly cooled.

In the tempering process S30, the quenched granular particles 4 are tempered by heating them in the heating furnace 5, which can be controlled to maintain a constant predetermined temperature in the furnace (from 130 °C or more to 230 °C or less, more preferably, from 160 °C or more to 230 °C or less), and for a predetermined period.

Such tempering using a relatively low temperature causes a condition in which the residual austenite structure ("the residual austenite") that still remains without a martensite transformation during the quenching process also still remains after the tempering. Further, the tempering process S30 enhances the toughness of the granular materials 4 that once have been degraded by the quenched process S20.

The tempering process S30 is not limited to the process to heat the granular particles in the heating furnace 5, but it may instead be a process in which the tempering is carried out at a predetermined temperature. In view of achieving the sufficient toughness of the granular particles 4 and thus the projection materials 1 to ensure their sufficient fatigue life, it is desirable that the tempering be carried out at a temperature that is the same as or above the temperature (130 °C) to obtain a sufficient effect from the tempering.

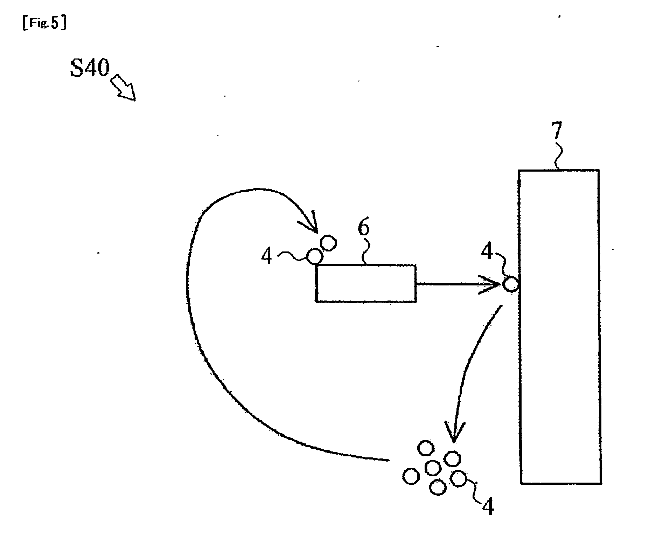

As shown in Fig. 5, the work hardening process S40 is a modifying treatment in which the granular particles 4 that have been tempered by the tempering process S30 are repeatedly projected at a target material 7 using the apparatus for shot peening 6, to enhance the harnesses of the granular particles 4.

In the work hardening process S40, the granular particles 4 that have been tempered are projected at the target material 7. It has a hardness that is the same as or above that of the granular particles 4, using the apparatus for shot peening 6 under the predetermined projection-conditions such as the predetermined velocity and the predetermined distance such that the granular particles 4 collide with the target material 7, to hardening treat the surface of each granular particle 4.

In this process, the residual austenite within each granular particle 4 is modified and caused to form a martensite formation such that the hardness of each granular particle 4 can be further enhanced. Repeating the projection of the granular particles 4 a predetermined number of times (or a predetermined period), granular particles 4 can be obtained that have been sufficiently modified and thus hardened.

The projection-conditions such as the predetermined velocity and the predetermined distance in the work hardening process S40 can be appropriately varied based on such data as the particle size and the mass of each granular particle 4.

The work hardening process S40 is not limited to the process to impart impact forces on the granular particles 4 by projecting them to collide with the target material 7 using the apparatus for shot peening, but it may instead be a process in which the granular particles 4 have plastic deformations and harden by applying a predetermined stress thereon.

The granular particles 4 that undergo the quenching process S20, the tempering process S30, and the work hardening process S40, in this order, as above described, are used as the projection materials 1 to be projected at the target components 3 and to collide with it using the apparatus for shot peening 2 in the shot peening process.

As described above, the process S10 for manufacturing the projection materials uses steel materials having quenching properties as the raw materials. The quenching process S20 forms the granular particles 4 that have been quenched by the water atomization. The tempering process S30 then quench-anneals the granular particles 4 by heating them in the heating furnace 5 at the predetermined temperature and for the predetermined period. The work hardening process S40 then projects the granular particles 4, at and collide with, the target material 7 using the apparatus for shot peening 6 such that the granular particles 4 are modified and hardened by applying the stress thereon to induce the plastic formation. As a result, a sufficiently high-hardness of the projection materials 1 can be achieved, while their costs are lowered.

Further, by using the projection materials 1 that have been sufficiently modified and hardened during the work hardening process S40 with the shot peening process, variations in the hardness of the projection materials 1 during the shot peening process can be carried out with stable qualities.

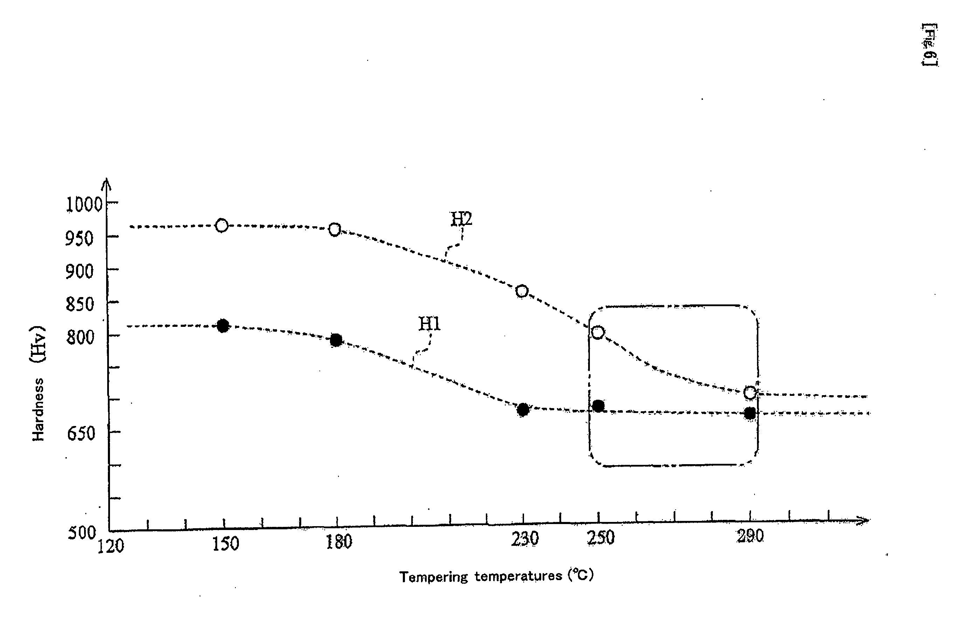

Below the transitions in the hardness of the granular materials 4 when the tempering temperature is varied in the tempering process S30 will be explained with reference to Fig. 6. In Fig. 6, the lateral axis indicates the tempering temperature (°C) and the longitudinal axis indicates the hardness (Hv).

Fig. 6 illustrates the relationships between the tempering temperatures T, the hardness H1 of the granular particles 4 after the tempering process, and the hardness H2 of the granular particles 4 after the work hardening process, when the tempering temperatures are varied in the tempering process S30. In particular, Fig. 6 illustrates the results of the hardness H1 after the tempering process and hardness H2 after the work hardening process measured by means of adequate measuring equipment for specimens B1 through B5.

These specimens B1 through B5 were treated by the tempering process at different temperatures for the tempering, and were then treated by a work hardening process similar to the work hardening process S40.

Below the sequential treatments that are applied to the specimens B1 through B5 are summarized.

The tempering process is applied on all specimens B1 through B5.

They are made from steel and are granulized using the water atomization such that each granular particle has a mean granular diameter of 70 *µ* m.

Specimens B1 through B5 are treated by the tempering process at a different temperatures for each specimen (B1: 150 °C, B2: 180 °C, B3: 230 °C, B4: 250 °C, and B5: 290 °C).

All specimens B1 through B5 are appropriately treated by the work hardening process using an apparatus for shot peening of an air-pressure type. The projection conditions are as follows: 0.12 MPa for the air-pressure, 1.3m³/min for the flow rate, 2.2kg/min for the weight of the projection materials, SK3 quenching for the material of the target, and 15 mm for the distance of the projection.

As shown in Fig. 6, the hardness of all specimens B1 through B5 can be improved by the work hardening process after the tempering process. This is because specimens B1 through B5 cause plastic deformations by applying stresses to them so as to harden them, in this process. The residual austenite within the specimens B1 through B5 during the tempering process is modified and induced to form a martensite formation in the work hardening process.

As shown in Fig. 6, for specimens B4 and B5, they are tempered at the conventional range of the tempering temperatures (from 250 °C or more to 290 °C or less), the hardness H1 after the tempering process is on the order of Hv 650 to Hv 700, and the hardness H2 after the work hardening process is on the order of Hv 700 to Hv 800. In contrast, for specimens B1, B2, and B3 those are tempered at the range of the tempering temperatures (from 130 °C or more to 230 °C or less) of the present invention, and the hardness H1 after the tempering process is on the order of about Hv 650 to Hv 800, and the hardness H2 after the work hardening process is Hv 850 or more, such that high hardness are achieved. These results are based on the large or small quantities of the residual austenite within the specimens.

Namely, these results are based on high or low temperatures (or large or small degrees) used for the tempering in the tempering process.

As described above, for specimens B1, B2, and B3, a hardness of Hv 850, which is a significantly high hardness for projection materials made of the steel, can be achieved. In particular, Hv 950 can be achieved for specimens B1 and B2. This is because by enhancing the hardness by the work hardening process, as well as by enhancing the hardness by tempering at a relative low-temperature such that a large amount of the austenite structure still remains after the tempering process, this residual austenite is modified and induces the martensite formation in the work hardening process.

As seen in Fig. 6, the hardness after the work hardening process has a tendency to increase, if the temperature is as low as the tempering temperature T. To achieve the primary advantage that enhances the toughness, however, it is necessary that the tempering process be carried out at 130 °C or more. Further, in view of ensuring the repeated use as projection materials 1, it is desirable that the tempering is carried out at a temperature of 160 °C or more.

To this end, the present invention employs a preferable range of the tempering temperature of 230 °C or less to ensure achieving Hv 850 or more (i.e., "the high hardness" in the specification), as the hardness H2 after the work hardening process, in the tempering process S30.

Further, the tempering temperature in the tempering process S30 can be selected based on the desired hardness of the projection materials 1 manufactured by the manufacturing process S10 for manufacturing the projection materials. (For instance, if one wishes to obtain the desired hardness of Hv 950 or more, the tempering temperature is 130 °C to 180 °C.) In other words, the hardness of the projection materials 1 can be adjusted by controlling the tempering temperature in the tempering process S30.

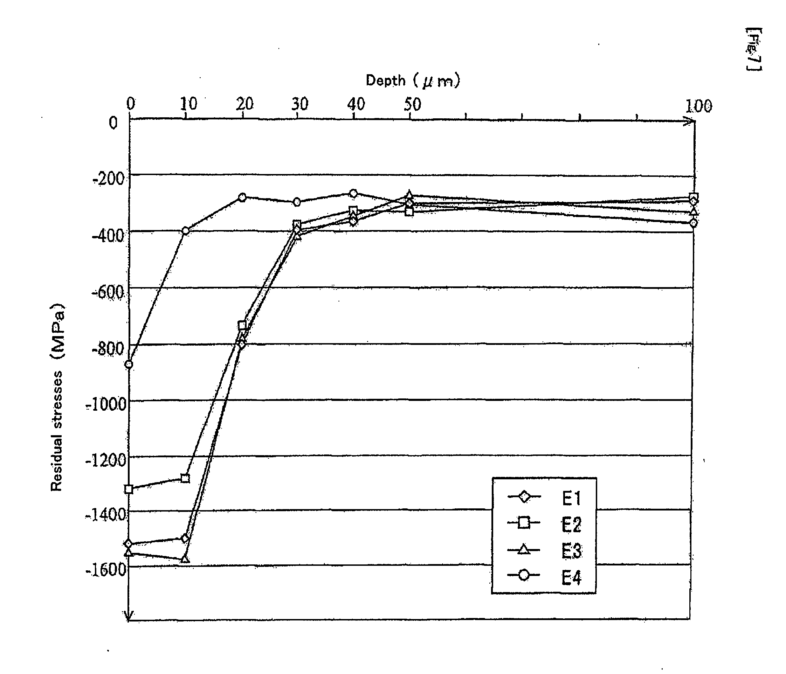

Below an advantage that is gained by projecting the projection materials 1 manufactured by the manufacturing process S10 of the present invention at the target component 3 using the apparatus for shot peening 2 will be explained in reference to Fig. 7. In Fig. 7, the lateral axis indicates the depth (µm) from the surface of the target component 3, and the longitudinal axis indicates the compressed residual stress (MPa).

Fig. 7 illustrates the results measured of the compressed residual stress that is imparted to the target component 3 and are measured under the conditions that are shown in Table 3, when projection materials E1 through E4, which are shown in Table 1, are projected at the target component 3, using the apparatus for shot peening 2, under the projection conditions shown in Table 2.

**[Table 1]**

| Materials | Mean granular-diameters (*µ*m) | Hardness of the projection Materials |
|---|---|---|
| E1:Steel (tempering at 180 °C) | 70 | Hv 950 |
| E2:Steel (tempering at 230 °C) | 70 | Hv 850 |
| E3: Ceramic (Zirconium) | 70 | Hv 1,000 |
| E4: Steel (untreated by the work hardening process) | 70 | Hv 650 |

As shown in Table 1, the projection materials E1 are manufactured by the manufacturing process S10 for manufacturing the projection materials of the present invention. The tempering temperature in the tempering process S30 is 180 °C. The projection materials E2 are manufactured by the manufacturing process S10 used in the present invention with the tempering temperature in the tempering process S30 being as 230°C. The projection materials E2 are made of ceramic that has a high hardness. The projection materials E4 are made of steel. They have been treated only by the quenching and the tempering, and not by the work hardening process.

**[Table 2]**

| Employed Equipment | Machine apparatus for shot peening of Air-pressure type |
|---|---|
| Air Pressure | 0.2 MPa |
| Mixing Ratio | 2 |
| Target Material | SCM420 Carburized, Quenched, and Tempered Material |
| Distance of Projection | 150 mm |

**[Table 3]**

| Equipment to measure compressed residual stress: PSPC (position-sensitive proportional counter) X-ray stress analyzer (manufactured by Rigaku Corporation) | |
|---|---|
| X-ray | Cr-Kα |
| Voltage of Tube | 40 kV |
| Current of Tube | 20 mA |
| Method of Measurement | Parallel and Inclined (at 0°, 15°, 30°, and 45°) |
| Diffraction Plane | AFe(211) |
| Diffraction Angle | 156.4° |
| Stress Constant | -318 MPa/degee |
| Field Measured | Field of 2 *φ* |
| Depth Measured | Adjustment by Electropolishing |

As shown in Fig. 7, one case in which the projection materials E1 are used indicates the value of the compressed residual stress that equals that of the case in which the projection materials E3 are used. Namely, it will be understood that when steel having a relative low-cost is used it can improve the fatigue strength to equal that of the ceramic projection materials that have a relatively high cost, about two times over the cost of the steel projection materials.

This is because a large quantity of the residual austenite can remain by tempering the projection materials with a range of relatively low temperatures, in the tempering process S30. Namely, because the residual austenite is modified caused to form a martensite formation during the work hardening process S40, the hardening is caused by the transition of the metal structure, as well as being caused by plastic deformations by imparting stresses to the projection materials.

Further, another case in which projection materials E2 (see Fig. 6), whose hardness is lower than that on an order of Hv 950 of the projection materials E1, but still is of a high hardness an as order of Hv 850 are used. A comparison with the projection materials E1 indicates that the imparted value of the compressed residual stress is somewhat less than that of the projection materials E1. The projection materials E2 thus do not achieve the merit of work hardening that equals those of projection materials E1 and E3. However, in comparison with projection materials E4, projection materials E2 can be imparted with a sufficiently large-value for the compressed residual stress, namely, about 1.5 times that of the projection materials E4. Clearly, the projection materials E2 provide an advantage that is substantially the same as that of the projection materials E1.

In view of ensuring the quality of the target component 3, it is important to know the projected quantities of the projection materials based on, e.g., the number of shot-particles. If a predetermined projected quantity of the projection materials to achieve the desired fatigue strength is set, and if the projected quantity of the projection materials, in the shot peening process, has still not been achieved, it is determined that the desired fatigue strength has not been obtained.

To this end, the number of shot particles of the steel projection materials E1, E2, and E4 can be readily counted by, e.g., an appropriate magnetometer, to measure the magnetisms of the magnetized shot particles. In contrast, for the ceramic projection materials, such as E3, it is difficult to count the number of shot particles, and thus specialized measurement-equipment to allow such a counting is necessary.

Therefore, although the projection materials E1 are composed of a steel that is a relatively low cost material, they can achieve an enhanced fatigue-strength that is substantially same as that of the ceramic projection materials E3, and they can also advantageously and readily control the qualities in the shot peening process.

Although the specified embodiments of the present invention have been explained, the scope of the present invention is defined by the appended claims.

## Claims

1. A method for manufacturing projection materials for a shot peening, the method comprising the steps of:
quenching the projection materials by rapidly cooling them;
tempering the projection materials at a predetermined temperature for the tempering;
work hardening the projection materials by imparting a stress on them;
wherein the steel is used as raw materials for the projection materials.

2. The method recited in claim 1, wherein the predetermined temperature of the tempering is to be set within a range of from 130 °C or more to 230 °C or less.

3. The method recited in claim 1, wherein the predetermined temperature of the tempering is to be set within a range of from 160 °C or more to 230 °C or less.

## Patentansprüche

1. Verfahren zum Herstellen von Strahlmaterialien zum Kugelstrahlen, wobei das Verfahren die Schritte aufweist von:
Abschrecken der Strahlmaterialien durch schnelles Abkühlen;
Härten der Strahlmaterialien mit einer vorbestimmten Temperatur zum Härten;
Kalthärten der Strahlmaterialien durch Einbringen von Verspannungen;
wobei Stahl als Rohmaterial für die Strahlmaterialien verwendet wird.

2. Verfahren nach Anspruch 1, wobei die vorbestimmte Temperatur zum Härten innerhalb eines Bereichs von 130°C oder mehr bis zu 230°C oder mehr festgelegt wird.

3. Verfahren nach Anspruch 1, wobei die vorbestimmte Temperatur zum Härten innerhalb eines Bereichs von 160°C oder mehr bis zu 230°C oder mehr festgelegt wird.

## Revendications

1. Procédé de fabrication de matériaux de projection pour un grenaillage, le procédé comprenant les étapes de :
désactivation des matériaux de projection par refroidissement rapide de ceux-ci ;
trempe des matériaux de projection à une température prédéterminée pour la trempe ;
écrouissage des matériaux de projection en impartissant une contrainte à ceux-ci ;
dans lequel l'acier est utilisé comme matériaux bruts pour les matériaux de projection.

2. Procédé selon la revendication 1, dans lequel la température prédéterminée de la trempe doit être fixée à l'intérieur d'une plage de 130 °C ou plus à 230 °C ou moins.

3. Procédé selon la revendication 1, dans lequel la température prédéterminée de la trempe doit être fixée à l'intérieur d'une plage de 160 °C ou plus à 230 °C ou moins.
